# EUROPEAN PATENT APPLICATION

(11) **EP 2 182 243 A2**
(43) Date of publication of application: **05.05.2010**
(21) Application number: 09013188.9
(22) Date of filing: 20.10.2009
(51) Int. Cl.: F16F 15/129

(54) **Clutch driven plates**

(30) Priority: 31.10.2008 GB 0819975
(71) Applicant: Automotive Products S.p.A., Spontini, Ancona (IT)
(72) Inventor: Ribichini, Andrea, Castelbellino 60030 Ancona (IT); Gallagher, Paul Andrew, Monsano 60030 Ancona (IT)
(74) Representative: Morrall, Roger

(57) **Abstract**

A clutch driven plate which includes a central hub (10) for connection to an associated transmission input shaft rotatable about a first axis (G1), and outer annular friction member (11) supported from the hub for clamping against an associated flywheel rotatable about a second axis (F1) The friction member is rotatable relative to the hub against the action of a damping means (16,21) to damp torsional vibrations which occur during use of the driven plate, the hub also being radially and axially displaceable relative to the outer annular friction member to accommodate angular and translatory misalignment of the first and second axes (F1,G1). The radial displacement of the hub (10) relative to the annular friction member (11) is controlled by two sets of flexible radially inwardly projecting bow-shaped portions (30,31) of a plastics washer (19) which surrounds the hub (10) and is located radially between the hub and the friction member. One set of bow-shaped portions (30) contacts a generally outwardly facing surface on the hub when the hub is in its central position to provide a centralising bias to the hub at all times and the second set of bow-shaped portions (31) only contacts the hub after the hub has moved away from its central position to give an additional centralising bias force.

## Description

This invention relates to clutch driven plates (hereinafter referred to as of the kind described) which include a central hub for connection to an associated transmission input shaft rotatable about a first axis, an outer annular friction member supported from the hub for clamping against an associated flywheel rotatable about a second axis, the friction member being capable of limited rotation relative to the hub against the action of a damping means to damp torsional vibrations which occur during use of the driven plate.

Clutch driven plates of the kind described are well known but suffer from operational difficulties resulting from misalignment between the first and second axes due to the build up of manufacturing tolerances in clutch and transmission housings and components which support the transmission input shaft for rotation about the first axis and the tolerances in the crankshaft and crankshaft supports which support the flywheel for rotation about the second axis. As will be appreciated, when the clutch is engaged and the driven plate is clamped against the flywheel the driven plate rotates with the flywheel so the first and second axes of rotation must coincide any misalignment must be accommodated by the components of the driven plate.

It is an object of the present invention to provide a clutch driven plate which at least mitigates the above misalignment problem.

Thus according to the present invention there is provided a clutch driven plate which includes a central hub for connection to an associated transmission input shaft rotatable about a first axis, an outer annular friction member supported from the hub for clamping against an associated flywheel rotatable about a second axis, the friction member being rotatable relative to the hub against the action of damping means to damp torsional vibrations which occur during use of the driven plate, the hub also being radially and axially displaceable relative to the outer annular friction member to accommodate angular and translatory misalignment of the first and second axes, the clutch driven plate being **characterised in that** the radial displacement of the hub relative to the annular friction member is controlled by two sets of flexible radially inwardly projecting bow-shaped portions of a plastics washer which surrounds the hub and is located radially between the hub and the friction member, one set of bow-shaped portions contacting a generally radially outwardly facing surface on the hub when the hub is in its central position to provide a centralising bias to the hub at all times and the second set of bow-shaped portions only contacting the hub after the hub has moved away from its central position to give an additional centralising bias force.

The radial movement of the hub relative to the annular friction member may be controlled by the abutment of a radially inner edge of the plastics washer with the hub.

The axial displacement of the hub relative to the annular friction member may be controlled by axial deflection of second portions of the plastics washer, the second portions of the plastics washer comprising two sets of circumferentially spaced flexible tabs which project axially from the washer into contact with a generally radial surface on the hub, a first set of the tabs being deflected relative to the remainder of the plastics washer when the hub moves axially relative to the friction member to resist said axial movement and a second set of the tabs being deflected on further axial movement of the hub relative to the friction member to increase the resistance to such axial displacement

Angular displacement of the hub axis relative to the annular friction member axis is controlled by a combination of both radial deflection of bow-shaped portion and axial deflection of the second portion of the plastics washer.

Drive may be transmitted from the hub to the friction member via a flange component which can rotate relative to both the hub and friction member, a first series of circumferentially spaced compression springs partially housed in recesses in the plastics washer forming part of an idle damper of the driven plate and damping relative rotation between the flange and hub, and a second series of circumferentially spaced compression springs damping relative rotation between the flange and the friction member.

The circumferentially spaced compression springs may each be supported from the hub between pairs of radially extending abutments associated with the hub, each respective spring being compressed against one of each pair of radially extending abutments by one end of each respective recess in the plastics washer as the friction member rotates relative to the hub, the radially extending abutments being formed as separate components from the hub.

Each pair of spring support abutments may be formed as a generally U-shaped single component received in a respective recess in the hub. The pairs of spring support abutments may also be joined together by an annular friction disc which is contacted by a component which moves with the friction member to provide friction damping.

One embodiment of the present invention will now be described, by way of example only, with reference to the accompanying drawings in which:-
Figure 1 is an axial section of a clutch driven plate embodying the invention;

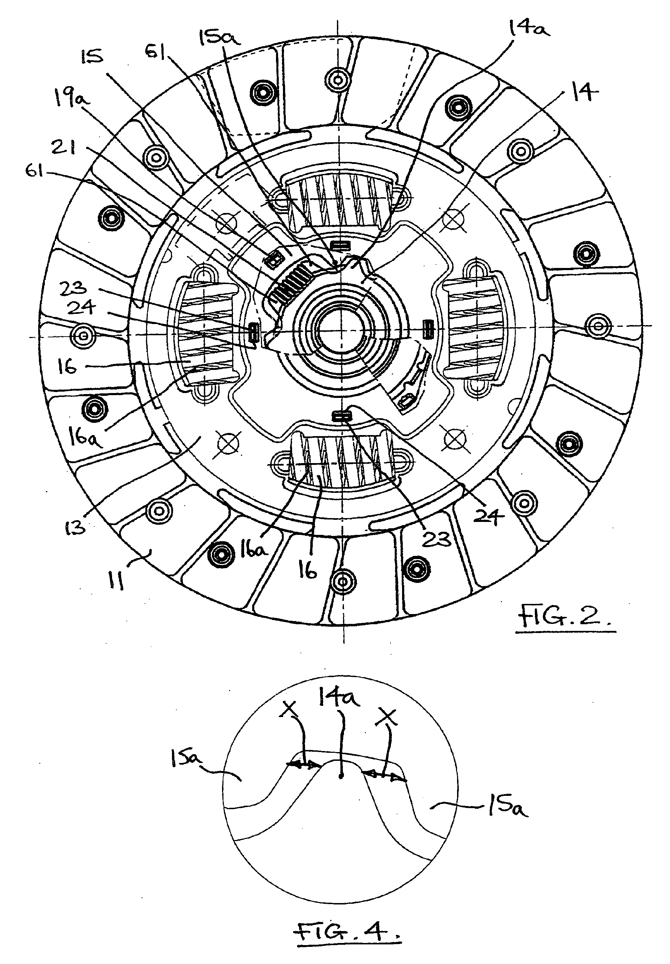

Figure 2 is a partly cut away side view of the driven plate of Figure 1 in the direction of arrow A;
Figures 3 is an axial section on an enlarged scale of part of the hub of the driven plate of Figure 1;
Figure 4 shows a fragmentary views of the circumferential play built into the driven plate;

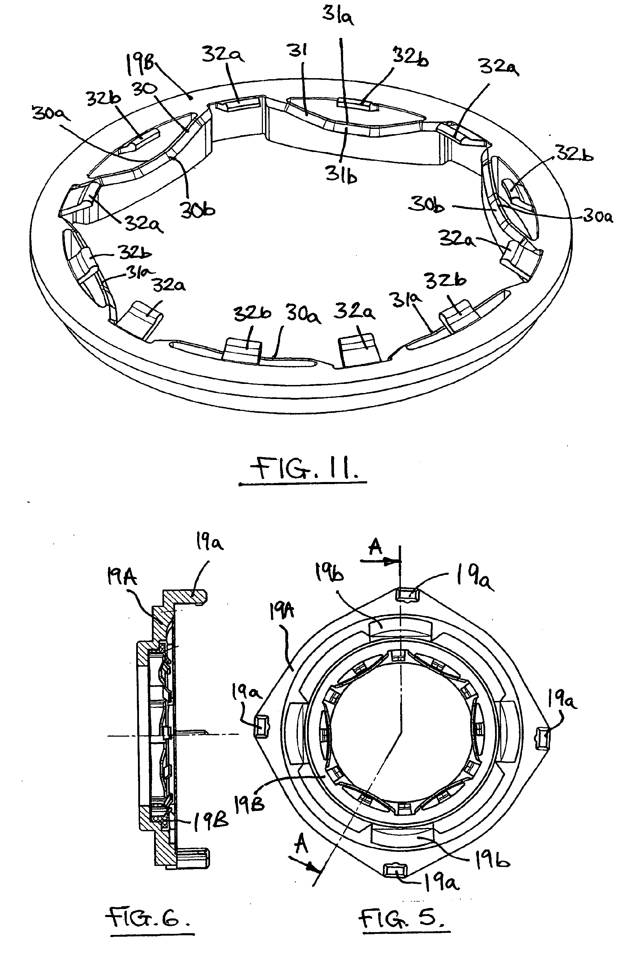

Figure 5 shows a side view of a hub support washer used in the driven plate of Figure 1;
Figure 6 shows a section on the line A-A of Figure 5;
Figure 7 and 10 show details of the washer of Figure 5;
Figure 11 shows a perspective view of an inner part of the washer of Figure 5;
Figure 12 shows a side view of a hub used in the driven plate of Figure 1;
Figure 13 shows a section on the line B-B of Figure 12;
Figure 14 shows a side view of a plastics spring support arrangement used in the hub of Figure 12;
Figure 15 shows a section on the line C-C of Figure 14;
Figure 16 shows the sintered metal part of the hub of Figure 12, and
Figure 17 to 19 shows stages in the operation of the idle rattle damper of the driven plate.

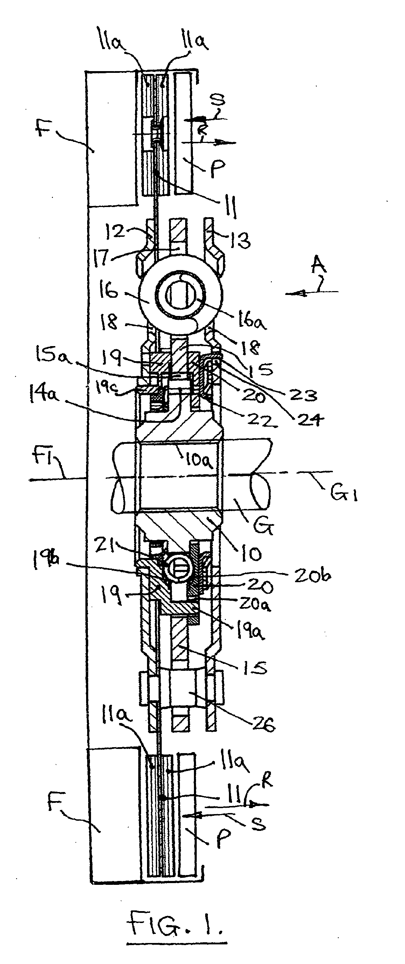

Referring to the drawings, the driven plate comprises a central hub 10 on which an outer annular friction member 11 with clutch linings 11a is mounted via out side plates 12 and 13 which are riveted together at 26. Linings 11a are designed to be clamped between a flywheel shown diagrammatically at F which is rotatable about an engine crankshaft F1 and a clutch pressure plate P carried by the flywheel by a spring means S. The pressure plate P is pulled away from the flywheel F to release the clutch by a release mechanism R also indicated diagrammatically in figure 1.

Hub 10 is splined at 10a for driving engagement with a gearbox input shaft G having an axis of rotation G1 and has a hub flange 14 with teeth 14a which engage with circumferential clearance 'X' teeth 15a formed on a support flange 15. Teeth 14a can also move radially relative to teeth 15a as will be referred to below. Circumferentially acting compression springs 16 and 16a engage cut outs 17 in flange 15 and windows 18 in side plates 12 and 13 to damp the relative rotation between outer side plates 12 and 13 and flange 15 and thus constitute part of a main drive damper of the driven plate.

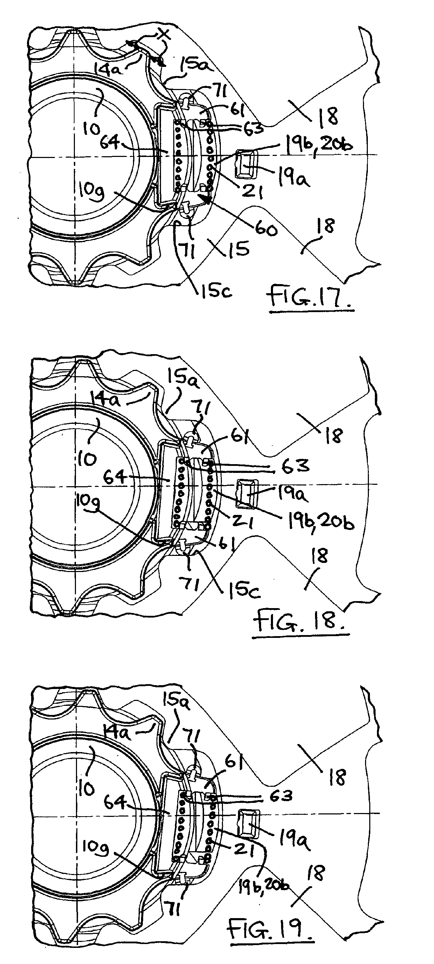

Located either side of support flange 15 are plastics washers 19 and 20 which are connected together and to flange 15 by projections 19a on washer 19 which engage cut outs 15b in flange 15 and openings 20a in washer 20. Washers 19 and 20 also include recesses 19b and 20b respectively which accommodate idle damper springs 21. Springs 21 are supported from hub flange 14 by spring support assemblies 60 which each include a pair of radially extending abutments 61 between which each spring is carried. Each spring support assembly 60 extends through a cut-out 15c (see Figures 17 to 19) in the inner periphery of flange 15. Thus as the flange 15 rotates relative to the hub 10 the springs 21 are each compressed between one of the pair of abutments 61 and one end of each respective recess 19b, 20b to provide idle rattle damping of the driven plate. Outer side plate 12 is supported on axially extending tubular portion 19c of washer 19.

As will be appreciated, the driven plate basically operates in two angular ranges of rotation. A first or idle angular range determined by the circumferential clearance X during which friction member 11, outer side plates 12 and 13, and flange 15 rotation relative to hub 10 and a second or main drive range after teeth 14a and 15a are in contact with each other and during which friction member 11 (and hence outer side plates 12 and 13) rotate relative to support flange 15 (and hence hub 10).

During the first or idle angular range relative rotation of friction member 11 relative to hub 10 is resisted by idle springs 21 and during the second or main drive range relative rotation between friction member 11 and hub 10 is resisted by main damping springs 16 and 16a.

The idle damper also includes friction damping provided by a friction member 22 which has tangs 23 which extend through apertures 24 in side plate 13. Friction member 22 is biased into contact with plastics washer 20 by wavy washer 25 so that friction damping of the rotation between hub 10 and side plates 12 and 13 is provided.

Plastics washer 19 allows both radial and axial movement of hub 10 relative to the side plates 12 and 13 (hence friction member 11). This movement accommodates angular misalignment of shaft axes F1 and G1 and also translatory misalignment of these shafts in which the shafts are generally parallel to each other but not aligned.

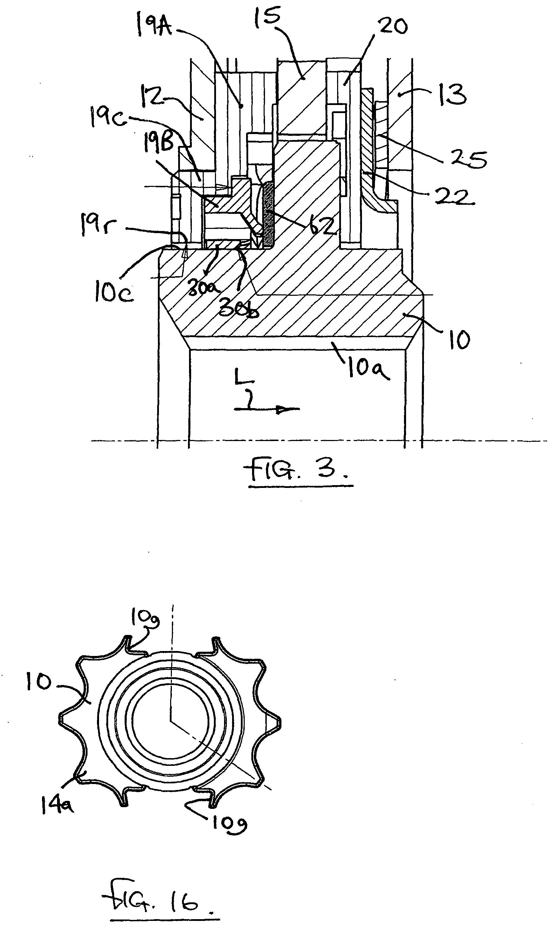

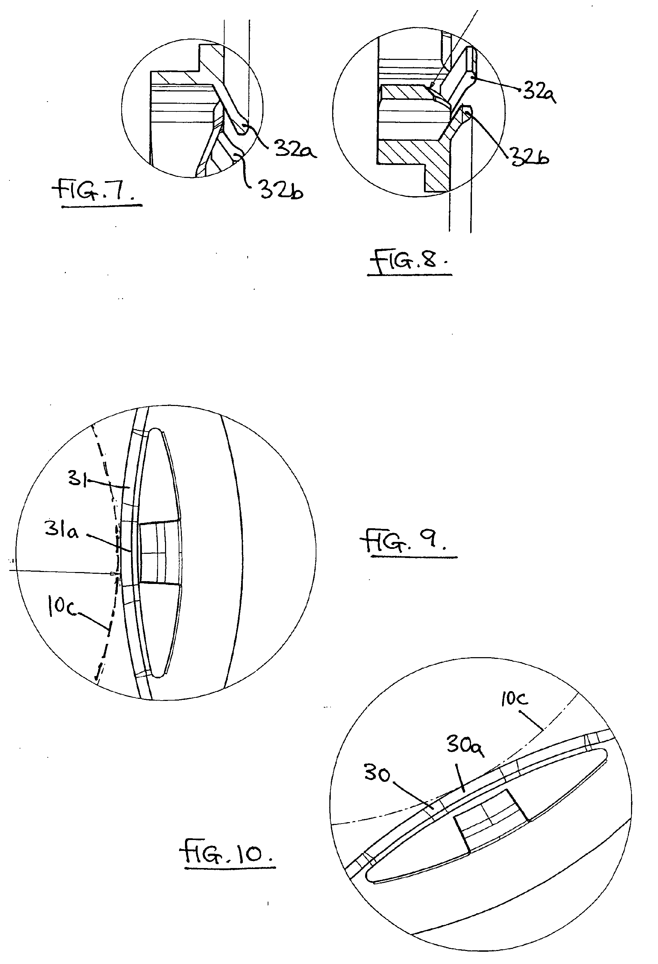

Plastics washer 19 is in two concentric parts 19A and 19B which are bonded together by adhesive or welding etc. Outer part 19A includes projections 19a and spring recesses 19b. Inner part 19B includes two sets of flexible bow-shaped bridge portions 30 and 31 which are circumferentially spaced around the inner periphery of washer 19. The central regions 30a of the first set of bridge portions 30 contact the radially outwardly facing shoulder 10c on hub 10 at all times as indicated in Figures 3 and 10. The bridge portions 30a bias the hub 10 towards a central position and are deflected as the hub 10 moves radially relative to side plates 12 and 13. The radial displacement of hub 10 relative to side plates 12, 13 and hence friction member 11 is limited by the contacts of the inner rim 19r of the outer part 19A with the shoulder 10c. Central regions 31a of the second set of bridge portions 31 (see Figure 9) are spaced a small distance (for example 0.2-0.3mm) from the shoulder surface 10c when the hub 10 is in its central position. Thus the second set of bridge portions contacts the surface 10c after a predetermined displacement of the hub from its central position to increase the restoring bias.

The bridge portions 30 and 31 are chamfered at 30b and 31b to assist assembly onto the hub 10.

Axial displacement of hub 10 relative to side plates 12 and 13 is controlled by two sets of flexible axially projecting tabs 32a and 32b (see Figures 7 and 8) which engage a friction disc 62 formed integrally with spring support assemblies 60 as will be described in detail below. As hub 10 moves axial relative to side places 12 and 13, as indicated by arrow L in Figure 3, the tabs 32a are first to contact disc 62 and further axial movement results in the second set of tabs 32b contacting disc 62 and increasing the resistance to axial displacement of hub 10. The tabs 32a and 32b tend to displace hub 10 back to the position shown in Figure 3. Contact between tabs 32a and 32b and disc 62 also provides frictional damping of the rotation between the hub 10 and flange 15 in the idle damper.

As will be appreciated, when the clutch is engaged, driven plate 10 is clamped against the flywheel F by pressure plate P and spring S and any misalignment between the axes of rotation F1 and G1 is accommodated by the combination of radial and axial movement of the hub 10 relative to the side plates 12 and 13 using the washer 19 as described above.

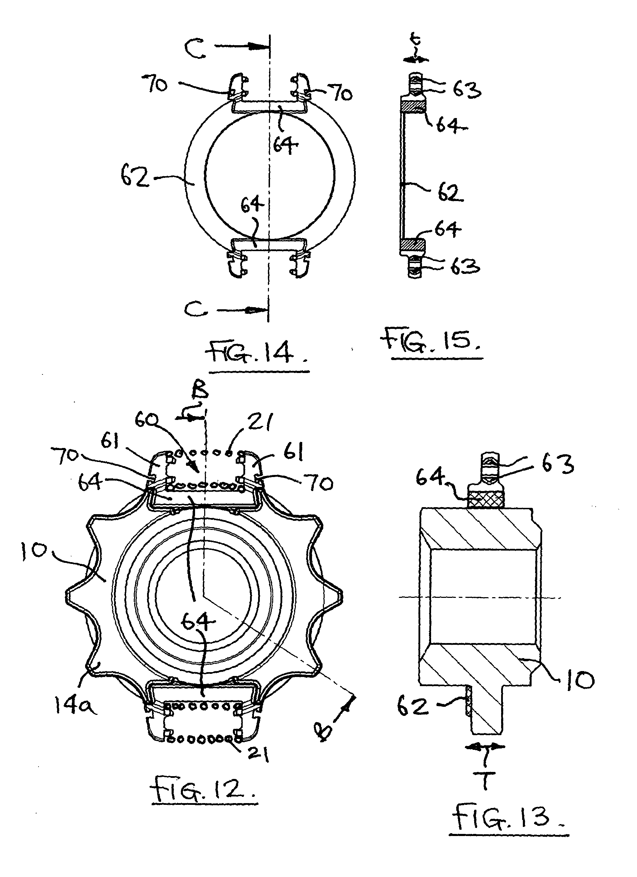

As can be seen from figures 12 to 18 the spring support assemblies 60 each comprise a pair of radially extending abutments 61 each provided with projections 63 which extend inside the adjacent end of the associated spring 21. Each pair of abutments 61 is joined by a base member 64 and the base members 64 are in turn joined by annular friction disc 62 to form a single piece plastics components. The base members 64 are received in undercut cut-outs 10g formed in hub 10.

Hub 10 is formed as a sintered metal component. By forming the spring support assemblies 60 as separate components from the hub 10 their manufacture is greatly simplified. Also by forming the spring support assemblies from plastics material they can be formed more accurately and also of a more complex and better designed shape than would be possible if they were made from sintered material.

For example, as can be seen from Figure 15, the thickness 't' of the abutments 61 is considerably less than the thickness "T" of the teeth 14a formed on hub 10 to allow easy contact of the springs 21 by the recesses 19b, 20b. If such wildly differing thicknesses were formed on a single sintered component this would cause manufacturing problems in achieving uniform density of the sintered component which would in turn introduce local weakness into the component in highly stressed areas.

The abutments 61 also include, on their outer surfaces, recesses 70 in which elastomeric cushioning buttons 71 are mounted. As can be seen from Figures 17 to 19 as the hub 10 rotates relative to the flange 15 the spring support abutments 61 move in their respective cut outs 15c and, just prior to drive transmitting contact between teeth 14, 15a (see Figure 18), one of the elastomeric cushioning buttons 71 contacts the end of the respective slot 15c to cushion the take-up of drive between teeth 14a, 15a. Figure 19 shows the teeth 14a, 15a in full drive transmitting contact with button 71 compressed. This use of cushioning buttons 71 significantly reduces impact noise between teeth 14a and 15a when a sudden release of the clutch pedal occurs with the engine at idle and the vehicle is not moving.

## Claims

1. A clutch driven plate which includes a central hub (10) for connection to an associated transmission input shaft rotatable about a first axis (G1), and outer annular friction member (11) supported from the hub for clamping against an associated flywheel rotatable about a second axis (F1), the friction member being rotatable relative to the hub against the action of damping means (16,21) to damp torsional vibrations which occur during use of the driven plate, the hub also being radially and axially displaceable relative to the outer annular friction member to accommodate angular and translatory misalignment of the first and second axes (F1,G1), the clutch driven plate being **characterised in that** the radial displacement of the hub (10) relative to the annular friction member (11) is controlled by two sets of flexible radially inwardly projecting bow-shaped portions (30,31) of a plastics washer (19) which surrounds the hub (10) and is located radially between the hub and the friction member, one set of bow-shaped portions (30) contacting a generally outwardly facing surface on the hub when the hub is in its central position to provide a centralising bias to the hub at all times and the second set of bow-shaped portions (31) only contacting the hub after the hub has moved away from its central position to give an additional centralising bias force.

2. A driven plate according to claim 1 in which the radial displacement of the hub (10) relative to the annular friction member (11) is limited by the abutment of a radially inner edge (19r) of the plastics washer (19) with the hub (10).

3. A driven plate according to claim 1 or 2 in which the axial displacement of the hub relative to the annular friction member is also controlled by axial deflection of second portions of the plastics washer (19), the second portions of the plastics washer comprising two sets of circumferentially spaced flexible tabs (32a,32b) which project axially from the washer into contact with a generally radial surface (62) on the hub, a first set of the tabs (32a) being deflected relative to the remainder of the plastics washer when the hub moves axially relative to the friction member to resist said axial movement and a second set of the tabs (32b) being deflected on further axial movement of the hub relative to the friction member to increase the resistance to such axial displacement.

4. A driven plate according to any one of claims 1 to 4 in which the bow-shaped portions (30,31) have chamfered edges (30a,31a) to assist mounting on the hub (10).

5. A driven plate according to any one of claims 1 to 4 in which drive is transmitted from the hub (10) to the friction member (11) via a flange component (15) which can rotate relative to both the hub and friction member, a first series of circumferentially spaced compression springs (21) partially housed in recesses (19b,20b) in the plastics washer (19,20) forming part of an idle damper of the driven plate and damping relative rotation between the flange (15) and hub (10), and a second series of circumferentially spaced compression springs (16) damping relative rotation between the flange (15) and the friction member (11).

6. A driven plate according to claim 5 in which the first series of circumferentially spaced compression springs (21) are each supported from the hub between pairs of radially extending abutments (61) associated with the hub (10), each respective spring (21) being compressed against one of each pair of radially extending abutments (61) by one end of each respective recess (19b,20b) in the plastics washer (19,20) as the friction member (11) rotates relative to the hub (10), the radially extending abutments (61) being formed as separate components from the hub.

7. A driven plate according to claim 6 in which each pair of spring support abutments (61) are formed as a generally U-shaped single component (60) received in a respective recess (10g) in the hub (10).

8. A driven plate according to claim 7 in which the pairs of spring support abutments (60,61) are joined together by an annular friction disc (62) to form a single piece component.

9. A driven plate according to claim 7 or 8 in which the U-shaped components (60) are received in undercut recesses (10g) in the hub (10).

10. A driven plate according to any one of claims 6 to 9 in which the outer surfaces of the pairs of radially extending spring support abutments (61) carry cushioning means (71) which contact the flange component before interengaging formations on the hub and flange component come into drive transmitting contact thus cushioning teeth contact and reducing impact noise between the interengaging formations.

11. A driven plate according to any one if claims 6 to 10 in which the pairs of radially extending spring support abutments (60,61) are manufactured from plastics material.

12. A driven plate according to claim 11 in which the hub (10) is of a sintered metal construction.

13. A driven plate according to any one of claims 1 to 5 in which friction damping of the circumferential movement of the friction member (11) relative to the central hub (10) is provided by preloading (25) the first and/or second portions (20) of the plastics washer (19,20) into frictional contact with adjacent parts (22) connected with the friction member.
